# EUROPEAN PATENT APPLICATION

(11) **EP 4 456 180 A1**
(43) Date of publication of application: **30.10.2024**
(21) Application number: 22911722.1
(22) Date of filing: 09.12.2022
(51) Int. Cl.: H01M 4/134, H01M 4/131, H01M 4/36, H01M 4/48, H01M 4/38, H01M 4/62, H01M 4/587, H01M 4/1395, H01M 4/1391

(54) **NEGATIVE ELECTRODE MATERIAL FOR SECONDARY BATTERY, AND PREPARATION METHOD THEREOF**

(30) Priority: 22.12.2021 KR 20210185025
(71) Applicant: OCI Company Ltd., Seoul 04532 (KR)
(72) Inventor: LEE, Seunggwan, Seongnam-si Gyeonggi-do 13212 (KR); JEONG, Eunhye, Seongnam-si Gyeonggi-do 13212 (KR); CHI, Eunok, Seongnam-si Gyeonggi-do 13212 (KR)
(74) Representative: Zacco Sweden AB
(86) International application number: PCT/KR2022/020070
(87) International publication number: WO 2023/121089

(57) **Abstract**

Disclosed are a negative electrode material for a secondary battery and a preparation method thereof, the negative electrode material enhancing the initial discharge capacity, initial efficiency and life characteristics of the secondary battery. The negative electrode material for a secondary battery according to the present disclosure comprises an active material having a carbon-coated surface, a conductive material, and a binder. The active material comprises a magnesium-doped composite. The magnesium-doped composite comprises silicon oxide (SiOₓ, 0.5<x≤2) nanoparticles, silicon (Si) nanoparticles, and magnesium oxide nanoparticles. The diameter of the magnesium oxide nanoparticles may be 30-150nm.

## Description

### FIELD

The present disclosure relates to a negative-electrode material for a secondary battery which may improve initial discharge capacity (IDC), initial efficiency (ICE), and lifespan characteristics of the secondary battery, and a method of preparing the same.

### DESCRIPTION OF RELATED ART

The performance improvement of secondary batteries is based on components of a positive-electrode material, a negative-electrode material, and electrolyte.

Graphite which is mainly used as the negative-electrode material has a theoretical capacity limited to 370 mAh/g. Thus, development of non-carbon-based negative-electrode materials such as silicon, tin, germanium, and zinc as an alternative to the graphite negative-electrode material is in progress.

Among the non-carbon-based negative-electrode materials, silicon has a theoretical capacity of 4000 to 4200 mAh/g and thus has a capacity of almost 10 times or greater of that of the graphite, and thus is attracting attention as a material to replace the graphite.

The negative-electrode active material using silicon may improve charging/discharging capacity compared to the conventional negative-electrode active material using carbon, thereby increasing energy density. However, silicon exhibits a volume expansion of over 300% during the process of intercalating and deintercalating lithium ions. Thus, the cycle characteristics thereof deteriorate.

SiOₓ (0.5<x≤2) has high mechanical strength due to the oxide produced during the initial charge and discharge process. Accordingly, the negative-electrode material including SiOₓ has stability against the volume expansion that occurs during charging and discharging. Thus, many attempts are being made to use the negative-electrode material including SiOₓ to improve the lifespan characteristics of secondary batteries.

However, silicon oxide (SiOₓ) (0.5<x≤2) has the disadvantage of low initial efficiency due to an irreversible reaction in which a portion of lithium transferred to the negative-electrode material during initial charging does not return to the positive electrode material during the discharging.

Recently, in order to increase the initial efficiency of the secondary batteries, a scheme is being developed to react silicon oxide (SiOₓ) with metal lithium powders to prepare the negative-electrode material. However, this scheme reduces the capacity of the secondary battery and reduces the stability of a slurry (prepared by dispersing the active material and binder in distilled water as a solvent) during a coating process of the slurry on a copper plate for an electrode manufacturing process, thereby making it difficult to massproduce the negative-electrode material.

Therefore, there is a need for a negative-electrode material for a secondary battery that may improve the initial discharge capacity, initial efficiency, and lifespan characteristics of the secondary battery and may be stably mass-produced.

### DISCLOSURE

### TECHNICAL PURPOSE

A purpose of the present disclosure is to provide a negative-electrode active material including a densified composite.

A purpose of the present disclosure is to provide a negative-electrode material for a secondary battery that may improve the initial discharge capacity, initial efficiency, and lifespan characteristics of the secondary battery, using the negative-electrode active material.

Furthermore, a purpose of the present disclosure is to provide a method for preparing a negative-electrode material for a secondary battery in which the negative-electrode material may be stably mass-produced.

The purposes of the present disclosure are not limited to the purposes mentioned above, and other purposes and advantages of the present disclosure as not mentioned may be understood based on descriptions as set forth below, and will be more clearly understood based on embodiments of the present disclosure. Furthermore, it will be readily apparent that the purposes and advantages of the present disclosure may be realized by solutions and combinations thereof indicated in the claims.

### TECHNICAL SOLUTION

The present disclosure provides a negative-electrode material for a secondary battery, the negative-electrode material comprising an active material having a carbon-coated surface, a conductive material, and a binder, wherein the active material includes a magnesium-doped composite, wherein the magnesium-doped composite includes silicon oxide (SiOₓ, 0.5<x≤2) nanoparticles, silicon (Si) nanoparticles, and magnesium oxide nanoparticles, wherein a diameter of each of the magnesium oxide nanoparticles may be in a range of 30 to 150 nm.

A ratio of a weight of the silicon oxide nanoparticles, a weight of the silicon (Si) nanoparticles, and a weight of the magnesium oxide nanoparticles may be in a range of 100:80 to 120:5 to 30.

An average diameter (D₅₀) of the composite may be in a range of 1 to 18 *µ*m.

The present disclosure provides a method for preparing a negative-electrode material for a secondary battery, the negative-electrode material comprising an active material with a carbon-coated surface, a conductive material, and a binder, wherein the method comprises: (a) mixing silicon oxide (SiOₓ, 0.5<x≤2) nanoparticles, silicon (Si) nanoparticles, and magnesium oxide nanoparticles with each other to prepare a mixture; (b) adding a binder to the mixture and molding the mixture having the binder added thereto to prepare a molded product; (c) heat-treating the molded product to prepare a magnesium-doped composite; and (d) coating the magnesium-doped composite with carbon to prepare the active material, wherein each of the magnesium oxide nanoparticles may have a diameter in a range of 30 to 150 nm.

In the (b), 5 to 20 parts by weight of the binder based on 100 parts by weight of the silicon oxide nanoparticles may be added to the mixture.

The molding of the mixture having the binder added thereto to prepare the molded product may include compressing the mixture having the binder added thereto to prepare the molded product in a pellet form, or may include spray drying the mixture having the binder added thereto to prepare spherical powders as the molded product.

The heat-treatment in the (c) may include: (c1) a first step of increasing a temperature from a room temperature to 500°C; (c2) a second step of maintaining the temperature achieved by the first step to heat-treat the molded product; (c3) a third step of increasing the temperature from the heat-treatment temperature at the second step to 1200°C; and (c4) a fourth step of maintaining the temperature achieved by the third step to heat-treat the molded product.

### TECHNICAL EFFECT

The negative electrode material for the secondary battery according to the present disclosure includes the densified composite having magnesium doped thereto as the negative electrode active material, thereby improving initial discharge capacity, initial efficiency, and lifespan characteristics of the secondary battery.

The method for preparing the negative-electrode material for the secondary battery according to the present disclosure stably mass-produces the negative-electrode active material including the composite.

In addition to the above-mentioned effects, the specific effects of the present disclosure are described below along with the descriptions of the specific details for carrying out the present disclosure.

### BRIEF DESCRIPTION OF DRAWINGS

FIG. 1 is a flowchart showing a method for preparing a negative-electrode material for a secondary battery according to the present disclosure.
FIG. 2 shows a result of analyzing a composite of Present Example 1 with an XRD (Empayan Equipment from Malvern Intrinsic Company).
FIG. 3 is an SEM image of a cross-section of and a Mg distribution of a composite of each of Present Examples 1 to 3 according to the present disclosure.

### DETAILED DESCRIPTIONS

The above-described purposes, features and advantages are described in detail below with reference to the drawings and embodiments, so that those skilled in the art in the technical field to which the present disclosure pertains may easily implement the technical ideas of the present disclosure. When describing the present disclosure, when it is determined that a detailed description of the known element or step related to the present disclosure may unnecessarily obscure the gist of the present disclosure, the detailed description thereof is omitted. Hereinafter, a preferred embodiment according to the present disclosure will be described in detail with reference to the attached drawings. In the drawings, identical reference numerals are used to indicate identical or similar components.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

Hereinafter, a negative-electrode material for a secondary battery and a preparation method thereof according to some embodiments of the present disclosure.

The negative-electrode material for a secondary battery of the present disclosure includes an active material having a carbon-coated surface, a conductive material, and a binder, wherein the active material includes a densified composite doped with magnesium.

The active material includes the densified composite doped with magnesium (Mg), thereby further improving initial discharge capacity and initial efficiency of the secondary battery.

The composite doped with magnesium may include silicon oxide (SiOₓ, 0.5<x≤2) nanoparticles, silicon (Si) nanoparticles, and magnesium oxide nanoparticles.

In the active material, the magnesium oxide nanoparticles, the silicon oxide nanoparticles and the silicon (Si) nanoparticles may constitute the composite to further improve the characteristics of the secondary battery.

The magnesium oxide nanoparticles have a nano-size of 150 nm or smaller and thus have excellent dispersibility. Thus, the magnesium oxide nanoparticles are well mixed with other nanoparticles, such that magnesium is doped into between the silicon oxide nanoparticles and the silicon (Si) nanoparticles.

The magnesium-doped composite may mean a composite in which a small amount of magnesium is added such that magnesium is uniformly dispersed inside and outside the composite, and magnesium is uniformly embedded between the interfaces of the nanoparticles.

The active material includes a small amount of magnesium in the composite, thereby further improving initial discharge capacity, initial efficiency, and lifespan characteristics of the secondary battery.

Particularly, the magnesium oxide nanoparticles may have a diameter not of a micrometer size but of 30 to 150 nm, thereby improving the characteristics of the secondary battery. Preferably, the diameter of the magnesium oxide nanoparticles may be in a range of 30 to 130 nm, or may be in a range of 30 to 80 nm.

When the diameter of the magnesium oxide nanoparticles is out of 30 to 150 nm, or when the diameter of the magnesium oxide nanoparticles is 1 µm or larger, it is difficult to improve the characteristics of the secondary battery due to poor dispersion characteristics of Mg particles and thus particle agglomeration phenomenon thereof.

When the composite includes magnesium nitrate (Mg(NO₃)₂) particles instead of the magnesium oxide (MgO) nanoparticles, the stability of secondary battery preparation and performance of the secondary battery are deteriorated.

Therefore, it is preferable that the composite of the present disclosure comprises the magnesium oxide nanoparticles.

The capacity of the secondary battery is based on the silicon oxide nanoparticles and the silicon (Si) nanoparticles. In order to reduce the solid electrolyte interface (SEI) and irreversible capacity generated in the initial charge and discharge, the Mg source may be first reacted with silicon or silicon oxide to form a magnesium silicate phase, thereby reducing the irreversible capacity.

As described above, the magnesium oxide nanoparticles of the present disclosure are used as a doping concept for reducing the irreversible capacity. Thus, the use of excess magnesium may degrade the capacity of the battery itself.

Therefore, in the composite, a content of the magnesium oxide nanoparticles is smaller than a content of the silicon oxide nanoparticles, and is preferably smaller than a content of the silicon (Si) nanoparticles.

When the content of the magnesium oxide nanoparticles is smaller than each of the content of the silicon oxide nanoparticles and the content of the silicon (Si) nanoparticles, the MgO, Si, and SiOₓ nanoparticles are mixed with each other well without agglomeration, such that Mg is uniformly distributed between the interfaces of the particles and inside the particles, in addition to the above-described effects.

A weight ratio of the silicon oxide nanoparticles: the silicon (Si) nanoparticles: the magnesium oxide nanoparticles may be in a range of 100: 80 to 120: 5 to 30. For example, the weight ratio may be in a range of 100: 90 to 110: 10 to 20, and 100: 95 to 105: 13 to 18.

In the active material, the silicon oxide nanoparticles serve as a buffer for suppressing the volume expansion of silicon.

When not the composite but the silicon oxide nanoparticles or silicon (Si) nanoparticles are used alone as the active material, the silicon (Si) nanoparticles may react with lithium and have a volume expansion of 300% or greater, and thus the lifetime characteristics of the secondary battery may be drastically lowered. In order to improve such disadvantages, it is preferable to use the silicon oxide nanoparticles and silicon (Si) nanoparticles together.

When the silicon oxide nanoparticles or silicon (Si) nanoparticles are used alone, it is difficult to improve initial discharge capacity, initial efficiency, and lifespan characteristics of the secondary battery. Thus, it is preferable to use the composite including the silicon oxide nanoparticles, the silicon (Si) nanoparticles, and the magnesium oxide nanoparticles in accordance with the present disclosure.

The silicon oxide nanoparticles may be crystalline and/or amorphous, and the silicon (Si) nanoparticles may be crystalline.

Each of the silicon oxide nanoparticles and the silicon (Si) nanoparticles refers to particles having a diameter of 1 µm or smaller, that is, a diameter of several nm to several hundreds of nm.

The diameter of each of the silicon oxide nanoparticles and the silicon (Si) nanoparticles may be equal to or greater than a diameter of the silicon crystalline fine particles included in each of the silicon oxide nanoparticles and the silicon (Si) nanoparticles.

The diameter of each of the silicon oxide nanoparticles and the silicon (Si) nanoparticles may be in a range of 5 to 1000 nm, for example, 10 to 800 nm, 20 to 600 nm, 30 to 400 nm, or 40 to 200 nm.

The diameter of the nanoparticles may be measured using a Beckman Coululter Life Sciences ^{®}, LS - 13 320 Particle ^{®} Size Analyzer Equipment.

Each of the silicon oxide (SiOₓ, 0.5<x≤2) nanoparticle and the silicon (Si) nanoparticle has the silicon crystalline fine particle.

The active material has a structure in which the silicon crystalline fine particles having different diameters are dispersed in the composite while magnesium is distributed in the composite.

In accordance with the present disclosure, the crystalline fine particles of the nanoparticle refer to solid materials that constitute lattices regularly arranged or are randomly arranged in a space that constitutes the nanoparticle. The crystalline fine particle may be used interchangeably with a crystal, a crystal grain, and a crystalline fine particle.

The characteristics of the secondary battery may vary depending on the diameter (size) of the silicon crystalline fine particles.

It is preferable that a first silicon crystalline fine particle included in the silicon oxide (SiOₓ, 0.5<x≤2) nanoparticle and a second silicon crystalline fine particle included in the silicon (Si) nanoparticle have different diameters. Further, it is more preferable that the diameter of the first silicon crystalline fine particle is smaller than a diameter of the second silicon crystalline fine particle.

When the diameters of the first silicon crystalline fine particle and the second silicon crystalline fine particle are equal to each other, or when the diameter of the first silicon crystalline fine particle is larger than the diameter of the second silicon crystalline fine particle, the characteristics of the secondary battery as the improvement target according to the present disclosure is insufficiently improved.

Specifically, the diameter of the first silicon crystalline fine particle of the silicon oxide nanoparticle is preferably in a range of 3 to 20 nm. For example, the diameter of the first silicon crystalline fine particle may be in a range of 5 nm to 18 nm, for example, 7 to 16 nm.

The diameter of the second silicon crystalline fine particle of the silicon (Si) nanoparticle is preferably in a range of 20 to 50 nm. For example, the diameter of the second silicon crystalline fine particle may be in a range of 25 to 45 nm, for example, 30 to 40nm.

When the diameter of the first silicon crystalline fine particle is in a range of 3 to 20 nm, and the diameter of the second silicon crystalline fine particle is in a range of 20 and 50 nm, the initial discharge capacity and initial efficiency of the secondary battery may be improved, and stable lifespan characteristics may be secured.

The diameter of the silicon crystalline fine particles may be measured using X-ray diffraction (XRD, Empyrean equipment from Malvern Panalytical company (Netherlands)). For example, the FWHM (2θ) value at the crystal peak may be measured based on XRD. The measured value may be used to calculate a crystal size using the XRD FWHM method.

The weight ratio of the first silicon crystalline fine particles and the second silicon crystalline fine particles in the composite may be in a range of 100: 80 to 120. For example, the weight ratio may be in a range of 100: 90 to 110, and 100: 95 to 105.

When the weight ratio of the first silicon crystalline fine particles and the second silicon crystalline fine particles satisfies 100: 80 to 120, the initial discharge capacity, initial efficiency, and lifespan characteristics of the secondary battery may be further improved compared to the conventional secondary battery when the composite is applied, as the negative electrode material, to the secondary battery.

In addition, the molar ratio of oxygen (O): silicon (Si) in the composite may be in a range of 0.5: 1.0 to 1.0: 1.0. The molar ratio of oxygen to silicon satisfies 0.5 to 1.0, thereby further improving lifetime characteristics of the secondary battery.

As described above, the composite may have a form in which three types of nanoparticles are uniformly distributed, and the first silicon crystalline fine particles and the second silicon crystalline fine particles having different diameters are dispersed in the inside and on the surface thereof.

In addition, the composite may be not in a form in which the silicon oxide nanoparticles, the silicon (Si) nanoparticles, and the magnesium oxide nanoparticles are simply mixed with each other but in a form in which the silicon oxide nanoparticles, the silicon (Si) nanoparticles, and the magnesium oxide nanoparticles are mixed with each other into the highly densified composite.

The composite may be highly densified via a binder treatment and a step-by-step heat treatment of the preparation method to be described later. Since the composite is highly densified, the initial efficiency and lifespan characteristics of the secondary battery may be further improved.

The high density may be determined based on a specific surface area (BET) and may suppress the volume expansion of silicon.

A specific surface area of the composite may be in a range of 1 to 17 m²/g. For example, the specific surface area thereof may be in a range of 3 to 10 m²/g, or 3.3 to 4 m²/g.

When the specific surface area deviates from 1 to 17 m²/g, a large number of pores may be formed in the composite such that the characteristics of the secondary battery may be poor.

The specific surface area of the composite may be measured according to a specific surface area analysis by nitrogen adsorption using a Brunauer-Emmett-Teller-Teller (BET) formula (analysis equipment: BEL Japan LNC, Belsorp ^{®} Max).

The highly densified composite preferably has a micrometer size.

When the composite has the micrometer size, this may be advantageous in forming the highly densified composite.

The composite may have an average diameter (D₅₀) in a range of about 1 µm to about 18 µm.

For example, the average diameter (D₅₀) of the composite may be in a range of about 3 µm to about 15 µm, for example, about 5 µm to about 11 µm.

The average diameter (D₅₀) of the composite may be defined as a diameter based on 50% of the diameter distribution. The average diameter (D₅₀) may be measured using PSA equipment - BECKMAN COULTER life Sciences, LS 13 320 Particle Size Analyzer. For example, after dispersing the composite in a solution, the average diameter of the composite based on 50% of the diameter distribution may be calculated.

The active material constituting the negative-electrode material preferably includes the composite having a carbon-coated surface to prevent oxidation of the silicon (Si) nanoparticles.

The carbon coating layer formed on the surface of the composite may formed on the surface of the Si composite as the insulator using a HSPP (high softening point pitch) and may impart the conductivity thereto. Furthermore, the carbon coating layer acts as a protective film for the composite, thereby lowering interfacial resistance between the negative-electrode material and the electrolyte, and improving interfacial stability over time. Accordingly, applying the composite having the carbon coating layer formed thereon to the negative-electrode material of the secondary battery may allow charge/discharge efficiency and lifespan characteristics of the secondary battery to be improved.

A second carbon material included in the carbon coating layer may be located on the entire surface of the composite, or may be partially located on the surface thereof. Considering the effect of improving the physical properties of the negative-electrode material, it is desirable that the second carbon material be formed so as to have a uniform thickness along and on the entire surface of the composite.

80 to 95% by weight of the composite and 5 to 20% by weight of the carbon coating layer may be contained with respect to 100% by weight of the composite whose the surface is coated with the carbon. For example, 90 to 95% by weight of the composite and 5 to 10% by weight of the carbon coating layer may be contained with respect to 100% by weight of the composite whose the surface is coated with the carbon. When the content of the carbon coating layer (the second carbon material) is in a range of 5 to 20% by weight, the stability of the composite may be increased, and the interfacial resistance between the negative-electrode material and the electrolyte may be lowered. Conversely, when the content of the carbon coating layer exceeds 20% by weight, a problem may occur in which the initial capacity of the composite is reduced.

A thickness of the carbon coating layer may be in a range of 0.1 to 10 nm. However, embodiments of the present disclosure are not limited thereto.

The second carbon material may include one or more of natural graphite, artificial graphite, mesocarbon microbeads, and the high softening point pitch.

Among these, the pitch is produced by heat-treating the residue obtained by distilling petroleum, and has a high carbonization yield and low impurity content. This pitch has the effect of increasing the charging and discharging efficiency of the secondary battery and increasing the lifespan of the secondary battery.

The high softening point pitch refers to a pitch with a softening point of 200 to 300°C.

The composite may be used alone for the active material that constitutes the negative-electrode material. Alternatively, a combination of the composite and the first carbon material may be used for the active material that constitutes the negative-electrode material.

When the active material includes the combination of the composite and a first carbon material, the characteristics of the secondary battery may be further improved, and the conductivity and the lifespan characteristics thereof may be further improved.

In particular, when the active material includes the combination of the composite and the first carbon material, this may improve the electrical conductivity between the active materials, improve the electrochemical properties thereof relative to the electrolyte, and reduce the volume expansion of the silicon (Si) nanoparticles to increase the lifespan of the secondary battery.

The first carbon material may include natural graphite, artificial graphite, graphitized carbon fiber, amorphous carbon, etc., which may be commonly used as the negative-electrode active material.

A ratio of a weight of the composite: a weight of the first carbon material in the active material may be in a range of 1:1 to 1:7. For example, the ratio of the weight of the composite: the weight of the first carbon material may be in a range of 1:2 to 1:6, or 1:3 to 1:5.

The negative-electrode material for the secondary battery may include a conductive material and a binder in addition to the active material.

The conductive material may be included to impart conductive properties to the negative-electrode material. Thus, the conductive material may be used without limitations thereto as long as it does not cause chemical change and is electrically conductive.

For example, the conductive material may include one or more of tertiary carbon material, metal powder, metal fiber, conductive whisker, metal oxide, and conductive polymer.

The binder plays a role in improving the bonding between the active materials and the adhesion between the active material and the current collector, and may include an aqueous binder among binders commonly used for the negative-electrode material.

For example, the aqueous binder may include one or more of polyvinyl alcohol, starch, polyvinylpyrrolidone, tetrafluoroethylene, polyethylene, polypropylene, acrylic rubber, styrene-butadiene rubber (SBR), regenerated cellulose, hydroxypropyl cellulose, carboxymethyl cellulose (CMC), and fluorine-based rubber.

A weight ratio of the active material: the conductive material: the binder in the negative-electrode material for the secondary battery may be in a range of 100: 0.1 to 5: 1 to 20. For example, the weight ratio of the active material: the conductive material: the binder may be 100: 0.5 to 3: 2 to 7.

As described above, the active material of the negative electrode material for the secondary battery of the present disclosure includes the micro sized-composite doped with magnesium and highly densified, thereby suppressing volume expansion of silicon and producing the negative electrode material having a high capacity.

Accordingly, the active material in accordance with the present disclosure is very effective for the negative-electrode material that may improve the characteristics of the energy storage material, and may be applied to a secondary battery using a non-aqueous electrolyte.

In addition, the active material in accordance with the present disclosure may be applied for the negative-electrode material for the secondary battery in an IT product and an electric vehicle.

Another aspect of the present disclosure provides a method for preparing a negative-electrode material for a secondary battery, which will be described in detail below.

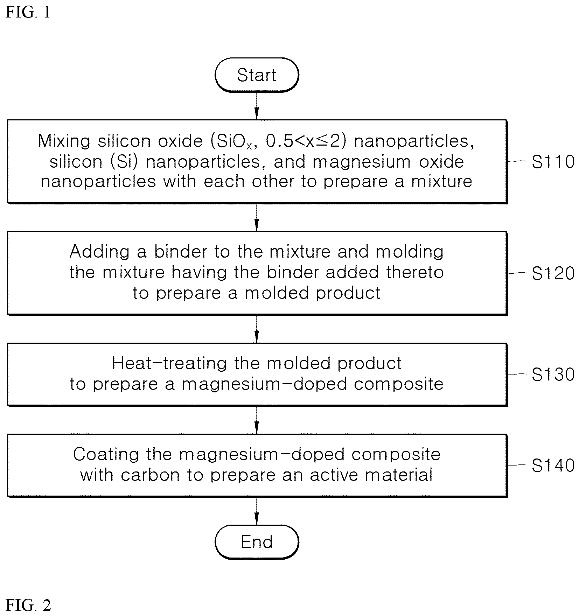

FIG. 1 is a flowchart showing a method for preparing a negative-electrode material for a secondary battery according to the present disclosure.

Referring to FIG. 1, a method for preparing an active material of the negative-electrode material for the secondary battery according to the present disclosure includes a step S110 of mixing silicon oxide (SiOₓ, 0.5<x≤2) nanoparticles, silicon (Si) nanoparticles, and magnesium oxide nanoparticles with each other to produce a mixture, a step S120 of adding a binder to the mixture and molding the mixture having the binder to prepare a molded product, a step S130 of performing heat-treatment of the molded product to prepare a magnesium-doped composite, and a step S140 of coating the composite with carbon to prepare the active material.

Afterwards, the composite and the first carbon material are further mixed with each other to prepare the active material. The active material, the conductive material, and the binder are mixed with each other to prepare a slurry. Then, the negative-electrode material may be prepared by coating the slurry on the current collector.

The method of preparing the active material of the negative-electrode material for the secondary battery in accordance with the present disclosure is as follows.

First, the method prepares the mixture by mixing the silicon oxide (SiOₓ, 0.5<x≤2) nanoparticles, the silicon (Si) nanoparticles, and the magnesium oxide nanoparticles with each other.

The mixture may be prepared by dispersing the silicon oxide nanoparticles, the silicon (Si) nanoparticles, and the magnesium oxide nanoparticles in an alcohol-based solvent such as ethanol, or/and distilled water, and then pulverizing the nanoparticles via ball milling.

At least one of magnesium hydroxide (Mg(OH)₂) particles, magnesium nitrate (Mg(NO₃)₂) particles, magnesium (Mg) nanoparticles, and magnesium gas instead of the magnesium oxide (MgO) nanoparticles may be used as a magnesium (Mg) precursor. In this case, the at least one has low dispersibility in the solvent or distilled water. Thus, it is difficult to prepare a dispersion solution using the at least one together with the silicon oxide nanoparticles and the silicon (Si) nanoparticles. Furthermore, the stability in the preparation may be not secured. Accordingly, the reaction is not sufficiently carried out in the step as described later, such that the composite with lowered physical properties may be obtained.

Therefore, it is preferable to include the magnesium oxide nanoparticles as the magnesium precursor. It is more preferable to include the magnesium oxide nanoparticles with a diameter of 30 to 150 nm.

The weight ratio of the silicon oxide nanoparticles: the silicon (Si) nanoparticles: the magnesium oxide nanoparticles may be in a range of 100:80 to 120:5 to 30.

The dispersing and pulverizing step may be performed for 1 to 10 hours. For example, it may be performed for 1 to 5 hours. When the dispersion and pulverizing time is smaller than 1 hour, the pulverizing effect of the nanoparticles may be insufficient. Conversely, when it exceeds 10 hours, the pulverizing time becomes too long and thus the process may become inefficient.

As described above, it is preferable that the diameter of the first silicon crystalline fine particles of the silicon oxide nanoparticles and the diameter of the second silicon crystalline fine particles of the silicon (Si) nanoparticles are different from each other.

The diameter of the first silicon crystalline fine particles of the silicon oxide nanoparticles may be in a range of 3 to 20 nm. The diameter of the second silicon crystalline fine particles of the silicon (Si) nanoparticles may be in a range of 20 to 50 nm.

Details regarding the silicon oxide nanoparticles, the silicon (Si) nanoparticles, and the silicon crystalline fine particles are the same as described above.

Next, the binder is added to the mixture which is molded to prepare the molded product.

When the binder is added to the mixture, the adhesion between the silicon oxide nanoparticles, the silicon (Si) nanoparticles, and the magnesium oxide nanoparticles is improved, such that the diameter of the composite may be in a range of a micro size, and the highly densified structure may be obtained.

In the step-by-step heat treatment process, which will be described later, the binder on the surfaces of the silicon oxide nanoparticles, the silicon (Si) nanoparticles, and the magnesium oxide nanoparticles, and the binder between the interfaces of the nanoparticles burn out, thereby forming pores in sites at which the binder was present, and providing a binding force between the nanoparticles, such that the composite may be highly-densified.

The binder affects the density and pore characteristics of the composite. The density and pore characteristics thereof may affect the characteristics of the secondary battery.

Therefore, in order to satisfy the initial efficiency and lifespan characteristics of the secondary battery, it is important to add the binder to the mixture, dry the mixture having the binder, and then heat-treat the molded product.

The binder may be an aqueous binder which may include one or more of polyvinyl alcohol, starch, polyvinylpyrrolidone, tetrafluoroethylene, polyethylene, polypropylene, acrylic rubber, styrene-butadiene rubber (SBR), regenerated cellulose, and hydroxypropyl cellulose, carboxymethylcellulose (CMC), and fluorine-based rubber.

Preferably, the binder may include one or more of styrene-butadiene rubber (SBR) and carboxymethylcellulose (CMC).

In order to satisfy both the high density and the micrometer size of the composite, 5 to 20 parts by weight of binder may be added based on 100 parts by weight of the silicon oxide nanoparticles. For example, 5 to 18 parts by weight of the binder may be added based on 100 parts by weight of the silicon oxide nanoparticles.

To convert the binder-added mixture into micrometer-sized powders (molded product), one of two schemes may be selected and used.

In a first scheme, the mixture with the binder added thereto is pulverized and dispersed via ball milling, and then dried. The dried powders may then be compressed to prepare pellet-shaped powders.

The pulverizing and dispersion may be performed for 1 to 10 hours. For example, the pulverizing and dispersion may be performed for 1 to 5 hours.

The diameter of the powder in the pellet form may be larger than the diameter of the dried powder before the compression. Furthermore, the pelletizing has an advantageous effect in allowing the diameter of the composite to be in a range of a micrometer.

The compressing of the powders into the pellets may be performed, for example, using hot pressing, casting, extrusion, etc. However, embodiments of the present disclosure are not limited thereto.

A second scheme is to prepare spherical powders using spray drying.

In the spray drying, a liquid material is rapidly dried with hot air into a powder state. The spray drying may be performed using spray dryer equipment including an atomizer that converts the liquid material into fine particles, a heater, and a dryer.

The spray drying scheme may control a particle size and a particle shape based on various conditions such as experimental conditions and a liquid state, and may be suitable for mass production.

Next, the molded powders are heat-treated step by step to prepare the magnesium-doped composite. The stepwise heat-treatment may be performed as follows.

First, the stepwise heat-treatment may be performed as follows: a first step is to increase a temperature from room temperature (25±1°C) to 500°C at an average temperature increase rate of 1 to 5°C/min; a second step is heat-treatment by maintaining the temperature achieved by the first step for 30 minutes to 3 hours; a third step is to increase the temperature from the heat-treatment temperature at the second step to 1200°C at an average temperature increase rate of 10 to 20°C/min; and a fourth step is heat-treatment by maintaining the temperature achieved by the third step for 30 minutes to 3 hours.

Preferably, the first step is to increase the temperature from room temperature to 450 to 550°C, the second step is to maintain the temperature at 450 to 550°C as the temperature range achieved by the first step, the third step is to increase the temperature from the heat-treatment temperature at the second step to 1150 to 1250°C and the fourth step is to maintain the temperature at 1150 to 1250°C achieved by the fourth step. In this way, the molded product may be sintered.

While the temperature is being raised up to around 500°C and up to around 1200°C, the heat-treatment of the molded product is continuously carried out at the increasing temperature.

In particular, according to the present disclosure, heat-treating the molded product including the silicon oxide nanoparticles, the silicon (Si) nanoparticles, and the magnesium oxide nanoparticles at around 500°C and then performing the final heat-treatment thereon at a higher temperature around 1200°C may allow the composite to be highly-densified. Furthermore, the high density of the composite has the effect of suppressing the silicon volume expansion and improving the characteristics of the secondary battery. In particular, in the final heat-treatment step, the silicon oxide nanoparticles are decomposed into SiO₂ and Si under disproportionation, such that the silicon crystalline fine particles may be uniformly dispersed.

In this respect, the step-by-step heat-treatment in accordance with the present disclosure is different from a heat-treatment step in a single temperature range at least one time, or a total of two times of heat-treatments at different temperature ranges, which is conventional.

When using the pellet-type powders, after the step-by-step heat-treatment, first pulverizing is performed with a coarse pulverizing means, and second pulverizing is performed in a ball milling manner, such that the highly-densified composite with an average diameter (D₅₀) of 3 to 15 *µ*m may be prepared.

The pulverizing may be performed for 1 to 10 hours. For example, the pulverizing may be performed for 1 to 5 hours. The average diameter (D₅₀) of the composite is as described above.

Using the spray drying, the pulverizing process may be omitted.

Next, the carbon is coated on the magnesium-doped composite to prepare the active material.

The carbon coating may be performed to impart conductive properties and may be performed to increase the stability of the composite and suppress its reactivity to moisture and oxygen.

The second carbon material may be wet-coated on the composite and may be subjected to carbonization at 800 to 1200°C and in an inactive atmosphere, such that a carbon coating layer that acts as a protective film may be formed on the surface of the composite.

Specifically, the wet coating may include a first step of dissolving the second carbon material in an organic solvent such as THF to produce a carbon solution, a second step of dissolving the composite in an organic solvent such as THF to produce a composite solution, and a third step of mixing the carbon solution and the composite solution with each other to produce a mixed solution, and removing the solvents therefrom, followed by drying, and then carbonization.

The carbon coating may be performed at 900 to 1100°C. The inactive atmosphere may include one or more of argon (Ar) gas, nitrogen (N₂) gas, helium (He) gas, and xenon (Xe) gas.

5 to 20% by weight of the second carbon material may be added based on 100% by weight of the composite with the carbon-coated surface. For example, 5 to 10% by weight of the second carbon material may be added based on 100% by weight of the composite with the carbon-coated surface.

The second carbon material of the carbon coating layer may include one or more of natural graphite, artificial graphite, mesocarbon microbeads, and high softening point pitch.

After preparing the composite with the carbon-coated surface, the composite and the first carbon material may be mixed with each other at a weight ratio of 1:1 to 1:7. Thus, the active material may be prepared.

Details about the active material including the silicon oxide and the first carbon material are the same as described above.

Subsequently, the slurry is prepared by mixing the active material, the conductive material, and the binder at a weight ratio of 100: 0.1 to 5: 1 to 20, and then the slurry is coated on the current collector to prepare the negative-electrode material.

Details regarding the ratio of the weight of the active material, the weight of the conductive material, and the weight of the binder are the same as described above.

A material of the current collector may be used without limitation as long as it does not cause chemical change in the secondary battery and is a conductive material. For example, copper, aluminum, nickel, etc. may be used as the material of the current collector.

Hereinafter, specific examples of the negative-electrode material for the secondary battery will be described.

### 1. Preparing composite

### Present Example 1

The silicon oxide nanoparticles (SiOₓ (0.5<x≤2)) (Si crystalline fine particle diameter 3 to 20 nm) with a diameter of 50 to 100 nm, the silicon nanoparticles (Si crystalline fine particle diameter 20 to 50 nm) with a diameter of 128 nm, and the magnesium oxide nanoparticles with a diameter of 33 to 66 nm were mixed with each other at a weight ratio of 100:100:15, thereby preparing the mixture. The weight ratio of the Si crystalline fine particles of the silicon oxide nanoparticles and the Si crystalline fine particles of the silicon nanoparticles is 100:100.

5 parts by weight of the binder (SBR and CMC) relative to 100 parts by weight of the silicon oxide nanoparticles was added to distilled water to produce a binder solution, and the mixture was added to the binder solution and was dispersed therein at 1200 rpm using a homogenizer to produce a mixed solution.

Next, the spray drying of the mixed solution was performed using the spray dryer equipment (Ain System Co., Ltd.) to obtain dried spherical powders with sizes of D₁₀ 2.07 *µ*m, D₅₀ 6.23 *µ*m, and D₉₀ 11.13 *µ*m. The dried spherical powders were heat-treated in four steps. In a first step, the temperature was increased to 500°C at 1°C/min. In a second step, the spherical powders were maintained at 500°C for 1 hour. In a third step, the temperature was increased, at 10°C/min, to 1200°C. In a final step, the spherical powders were maintained at 1200°C for 5 hours. In this way, the spherical powders were sintered.

In order to coat the Mg-doped composite with carbon, the high softening point pitch (a product developed by OCI) was wet-coated on the composite so that the carbon content was 10% by weight based on 100% by weight of the final particles. In the wetcoating, the HSPP was dissolved in THF to produce a HSSP solution, and the composite was dissolved in THF to produce a composite solution, then and the two solutions were mixed with each other to produce a mixed solution which in turn was subjected to evaporation and drying in a double boiling manner at 35 to 40°C using an evaporator.

Subsequently, a carbonization process was performed at 1000°C and under a nitrogen atmosphere. Thus, the composite with the carbon-coated surface was obtained as the final particles.

### Comparative Example 1

A composite with a carbon-coated surface was obtained in the same manner as Present Example 1, except that only the silicon oxide nanoparticles (SiOₓ (0.5<x≤2)) (diameter of the Si crystalline fine particles 3 to 20 nm) with a diameter of 50 to 100 nm were used as a staring material, and a CMC binder was used.

### Comparative Example 2

The silicon oxide nanoparticles SiOₓ (0.5<x≤2) with a diameter of 50 to 100 nm (diameter of Si crystalline fine particles 3 to 20 nm) were prepared.

5 parts by weight of the binder (CMC) relative to 100 parts by weight of the silicon oxide nanoparticles was added to distilled water to prepare a binder solution, and the silicon oxide nanoparticles were added to the binder solution and dispersed therein at 1200 rpm using a homogenizer to produce a mixed solution.

Next, the spray drying of the mixed solution was performed using the spray dryer equipment (Ain System Co., Ltd.) to obtain dried spherical powders with sizes of D₁₀ 2.07 *µ*m, D₅₀ 6.23 *µ*m, and D₉₀ 11.13 *µ*m. The dried spherical powders were heat-treated in four steps. In a first step, the temperature was increased to 500°C at 1°C/min. In a second step, the spherical powders were maintained at 500°C for 1 hour. In a third step, the temperature was increased, at 10°C/min, to 1200°C. In a final step, the spherical powders were maintained at 1200°C for 5 hours. In this way, the spherical powders were sintered.

Next, the magnesium hydroxide Mg(OH)₂ (Sigma-Aldrich) was dispersed in distilled water to prepare a magnesium solution, and then the outer surfaces of the sintered powders was doped with the magnesium solution in a wet manner. Afterwards, the doped product was dried and heat-treated at 1200°C to prepare a magnesium silicate (Mg₂SiO₄) composite having the outer surface doped with magnesium.

In order to coat the prepared composite with carbon, the high softening point pitch (a product developed by OCI) was wet-coated on the composite so that the carbon content was 10% by weight based on 100% by weight of the final particles. In the wetcoating, the HSPP was dissolved in THF to produce a HSSP solution, and the composite was dissolved in THF to produce a composite solution, then and the two solutions were mixed with each other to produce a mixed solution which in turn was subjected to evaporation and drying in a double boiling manner at 35 to 40°C using an evaporator.

Subsequently, a carbonization process was performed at 1000°C and under a nitrogen atmosphere. Thus, the composite with the carbon-coated surface was obtained as the final particles.

### Comparative Example 3

The silicon oxide nanoparticles (SiOₓ (0.5<x≤2)) (Si crystalline fine particle diameter 3 to 20 nm) with a diameter of 50 to 100 nm, the silicon nanoparticles (Si crystalline fine particle diameter 20 to 50 nm) with a diameter of 128 nm, and magnesium hydroxide Mg(OH)₂ (Sigma-Aldrich) were prepared respectively at a weight ratio of 100:100:27. The weight ratio of the Si crystalline fine particles of the silicon oxide nanoparticles and the Si crystalline fine particles of the silicon nanoparticles is 100:100.

5 parts by weight of the binder (SBR and CMC) relative to 100 parts by weight of the silicon oxide nanoparticles was added to distilled water to produce a binder solution. Then, the prepared magnesium hydroxide Mg(OH)₂ was added to the binder solution and was dispersed therein. Then, the prepared silicon oxide nanoparticles, and the prepared silicon nanoparticles was added to the binder solution and was dispersed therein at 1200 rpm using a homogenizer to produce a mixed solution.

Next, the spray drying of the mixed solution was performed using the spray dryer equipment (Ain System Co., Ltd.) to obtain dried spherical powders with sizes of D₁₀ 2.07 *µ*m, D₅₀ 6.23 *µ*m, and D₉₀ 11.13 *µ*m. The dried spherical powders were heat-treated in two steps. In a first step, the temperature was increased to 1200°C at 10°C/min. In a second step, the spherical powders were maintained at 1200°C for 1 hour. In this way, the spherical powders were sintered.

In order to coat the Mg-doped composite with carbon, the high softening point pitch (a product developed by OCI) was wet-coated on the composite so that the carbon content was 10% by weight based on 100% by weight of the final particles. In the wetcoating, the HSPP was dissolved in THF to produce a HSSP solution, and the composite was dissolved in THF to produce a composite solution, then and the two solutions were mixed with each other to produce a mixed solution which in turn was subjected to evaporation and drying in a double boiling manner at 35 to 40°C using an evaporator.

Subsequently, a carbonization process was performed at 1000°C and under a nitrogen atmosphere. Thus, the composite with the carbon-coated surface was obtained as the final particles.

### 2. Preparing negative-electrode material for secondary battery

The carbon-coated composite of each of Present Example 1 and Comparative Examples 1 to 3 was dry-mixed with artificial graphite at a weight ratio of 1:4.9 to prepare the negative-electrode active material.

Next, the negative-electrode active material: conductive material (artificial graphite): binder (CMC: SBR = 3:7) were mixed with each other at a weight ratio of 100: 1.1: 5.3 to prepare the slurry.

The slurry was coated on a copper plate having a 10 *µ*m thickness.

### 3. Physical property evaluation method and results

Table 1 below indicates a pore size, the specific surface area, and the diameter of the carbon-coated composite and whether the carbon-coated composite is highly-densified. Table 2 below indicates the electrochemical properties of the negative-electrode material.
1) Specific surface area : BEL japan lnc, BELSORP-max was used to measure the specific surface area of the composite.
2) Whether the carbon-coated composite is highly-densified: The cross-section of the composite was observed with the naked eye using SEM. In this regard, when a content of pores (holes) was smaller than 10%, whether the carbon-coated composite is highly-densified was marked as "O", while when the content exceeded 10%, whether the carbon-coated composite is highly-densified was marked as "X".
3) Diameter: The average diameter (D₅₀) of the composite was measured using a BECKMAN COULTER life Sciences, LS 13 320 Particle Size Analyzer.
4) Initial discharge capacity and initial efficiency: Initial discharge capacity and initial efficiency were measured using half-cell device-TOSCAT-3100 equipment.
5) Lifespan (@50 cycles): Lifespan characteristics were measured using half-cell apparatus - TOSCAT-3100 equipment.

**[Table 1]**

| Examples | Specific surface area (m²/g) | Whether carbon-coated composite is highly-densified | Average diameter (D₅₀) (*µ*m) |
|---|---|---|---|
| Present Example 1 | 3.78 | O | 10.8 |
| Comparative Example 1 | 3.25 | O | 12.4 |
| Comparative Example 2 | 2.60 | X | 14.9 |
| Comparative Example 3 | 27.65 | X | 24.1 |

**[Table 2]**

| Examples | Initial discharge capacity (mAh/g) | Initial efficiency (%) | Lifespan (@50 cycles) |
|---|---|---|---|
| Present Example 1 | 532 | 87.3 | 92.2% |
| Comparative Example 1 | 496 | 86.2 | 93.8% |
| Comparative Example 2 | 457 | 85.6 | 91.5% |
| Comparative Example 3 | 480 | 86 | 91% |

Referring to Table 1 and Table 2, it may be identified that in Present Example 1 in which the silicon oxide nanoparticles, the silicon nanoparticles, and the magnesium oxide nanoparticles together with the binder are subjected to the four-step heat treatment, the micro-sized composite uniformly doped with Mg is prepared.

Furthermore, Present Example 1 were excellent in terms of the specific surface area, and the average diameter of the composite and whether the composite is highly-densified, and thus exhibited excellent results in initial discharge capacity, initial efficiency, and lifespan characteristics.

FIG. 2 is the result of analyzing the composite of Present Example 1 using XRD (Empyean equipment from Malvern Panalytical company). Referring to FIG. 2, since the peak of Mg₂SiO₄ is observed, it may be confirmed that MgO exists in the composite.

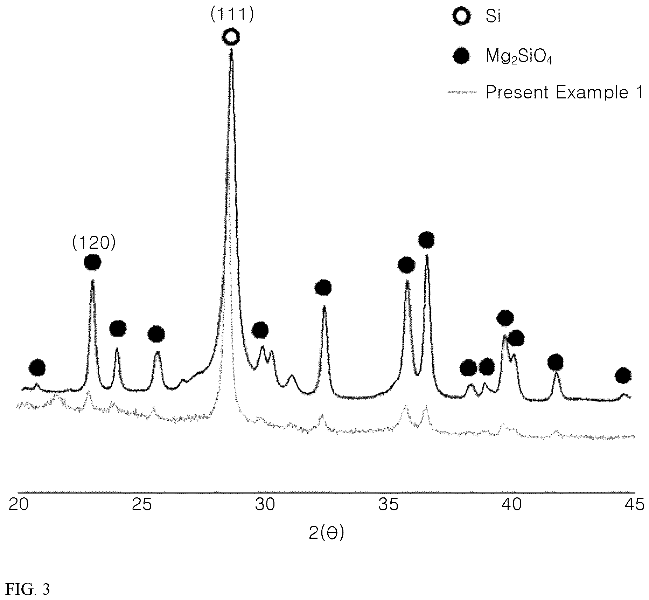

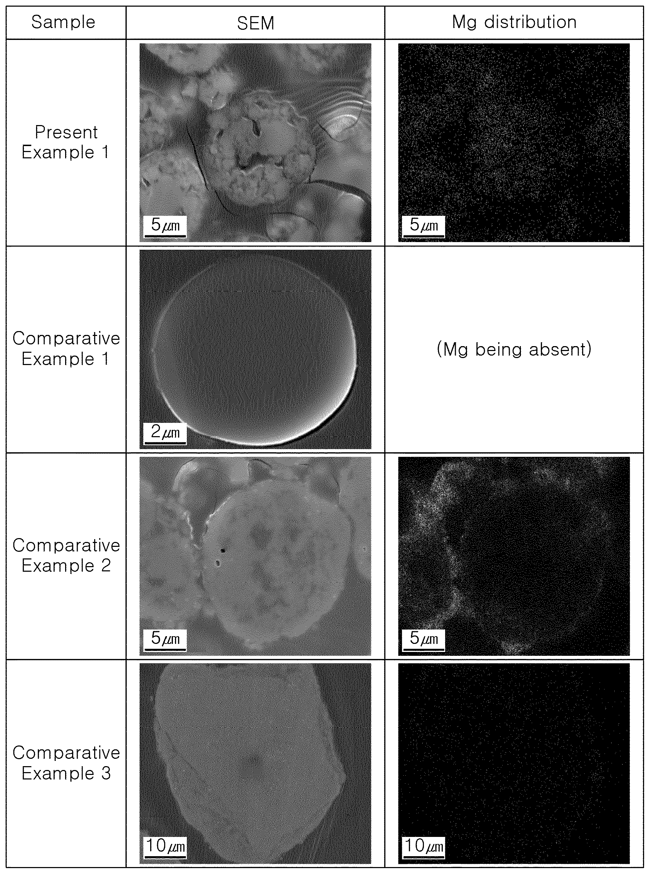

FIG. 3 is an SEM image of a cross section and a Mg distribution of the composite of each of Present Example 1 to Comparative Example 3 according to the present disclosure. The SEM image was checked to visually check that the specific surface area (BET) value in Table 1 is consistent with the SEM image result. The Mg distribution is an EDX result from SEM analysis.

Referring to FIG. 3, it may be identified that Present Example 1 using the magnesium oxide nanoparticles is most uniformly doped with Mg and is highly densified.

On the contrary, Comparative Example 1 includes only the silicon oxide nanoparticles. The density of the composite thereof is increased, and the lifespan thereof is similar to that in Present Example 1. However, the initial discharge capacity and initial efficiency thereof are lower than those of Present Example 1.

Comparative Example 2 is an example that does not include the silicon (Si) nanoparticles but includes micrometer-sized magnesium hydroxide particles. When the magnesium hydroxide particles are used as the Mg precursor, it is difficult to prepare a dispersion solution using the magnesium hydroxide particles together with silicon oxide because of low dispersibility of the magnesium hydroxide particles in water. For this reason, the magnesium hydroxide precursor was dispersed in ethanol and then, Mg was doped onto the outer surface of the composite in a wet manner.

In Comparative Example 2 in which the micrometer-sized magnesium hydroxide particles are used, the high density is not achieved, and the dispersibility of magnesium hydroxide is poor, resulting in Mg agglomeration. Accordingly, the electrochemical properties thereof exhibited relatively low values.

In Comparative Example 3, the micrometer-sized magnesium hydroxide particles are used, and the two-step heat treatment was performed. Thus, the particles are not micronized, and high density is not achieved, and the specific surface area value is quite high. Furthermore, the use of the micrometer-sized magnesium hydroxide particles results in nonuniform doping of Mg.

From the above results, it may be identified that because Present Example 1 of the present disclosure satisfies the diameter of the magnesium oxide nanoparticles, the binder treatment, and the stepwise heat treatment, the initial discharge capacity, the initial efficiency, and the lifespan characteristics thereof are further improved compared to those in Comparative Examples 1 to 3.

The present disclosure has been described above with reference to illustrative drawings. However, the present disclosure is not limited to the embodiments and drawings disclosed in the present disclosure. It is obvious that various modifications may be made thereto by those skilled in the art within the scope of the technical idea of the present disclosure. In addition, even when the effect of the configuration of the present disclosure was not explicitly described while describing the embodiment of the present disclosure, it is natural that the predictable effect from the configuration should be recognized.

## Claims

1. A negative-electrode material for a secondary battery, the negative-electrode material comprising an active material having a carbon-coated surface, a conductive material, and a binder,
wherein the active material includes a magnesium-doped composite,
wherein the magnesium-doped composite includes silicon oxide (SiOₓ, 0.5<x≤2) nanoparticles, silicon (Si) nanoparticles, and magnesium oxide nanoparticles,
wherein a diameter of each of the magnesium oxide nanoparticles is in a range of 30 to 150 nm.

2. The negative-electrode material for the secondary battery of claim 1, wherein a ratio of a weight of the silicon oxide nanoparticles, a weight of the silicon (Si) nanoparticles, and a weight of the magnesium oxide nanoparticles is in a range of 100:80 to 120:5 to 30.

3. The negative-electrode material for the secondary battery of claim 1, wherein a diameter of a first silicon crystalline fine particle of the silicon oxide nanoparticle and a diameter of a second silicon crystalline fine particle of the silicon (Si) nanoparticle are different from each other.

4. The negative-electrode material for the secondary battery of claim 1, wherein an average diameter (D₅₀) of the composite is in a range of 1 to 18 *µ*m.

5. The negative-electrode material for the secondary battery of claim 1, wherein a specific surface area (BET) of the composite is in a range of 1 to 17 m²/g.

6. The negative-electrode material for the secondary battery of claim 1, wherein the active material further includes a first carbon material.

7. The negative-electrode material for the secondary battery of claim 1, wherein a weight ratio of the active material: the conductive material: the binder in the negative-electrode material for the secondary battery is in a range of 100:0.1 to 5:1 to 20.

8. A method for preparing a negative-electrode material for a secondary battery, the negative-electrode material comprising an active material with a carbon-coated surface, a conductive material, and a binder, wherein the method comprises:
(a) mixing silicon oxide (SiOₓ, 0.5<x≤2) nanoparticles, silicon (Si) nanoparticles, and magnesium oxide nanoparticles with each other to prepare a mixture;
(b) adding a binder to the mixture and molding the mixture having the binder added thereto to prepare a molded product;
(c) heat-treating the molded product to prepare a magnesium-doped composite; and
(d) coating the magnesium-doped composite with carbon to prepare the active material,
wherein each of the magnesium oxide nanoparticles has a diameter in a range of 30 to 150 nm.

9. The method for preparing the negative-electrode material for the secondary battery of claim 8, wherein a ratio of a weight of the silicon oxide nanoparticles, a weight of the silicon (Si) nanoparticles, and a weight of the magnesium oxide nanoparticles is in a range of 100:80 to 120:5 to 30.

10. The method for preparing the negative-electrode material for the secondary battery of claim 8, wherein a diameter of a first silicon crystalline fine particle of the silicon oxide nanoparticle and a diameter of a second silicon crystalline fine particle of the silicon (Si) nanoparticle are different from each other.

11. The method for preparing the negative-electrode material for the secondary battery of claim 8, wherein in the (b), 5 to 20 parts by weight of the binder based on 100 parts by weight of the silicon oxide nanoparticles is added to the mixture.

12. The method for preparing the negative-electrode material for the secondary battery of claim 8, wherein the molding of the mixture having the binder added thereto to prepare the molded product includes compressing the mixture having the binder added thereto to prepare the molded product in a pellet form, or includes spray drying the mixture having the binder added thereto to prepare spherical powders as the molded product.

13. The method for preparing the negative-electrode material for the secondary battery of claim 8, wherein the heat-treatment in the (c) includes:
(c1) a first step of increasing a temperature from a room temperature to 500°C;
(c2) a second step of maintaining the temperature achieved by the first step to heat-treat the molded product;
(c3) a third step of increasing the temperature from the heat-treatment temperature at the second step to 1200°C; and
(c4) a fourth step of maintaining the temperature achieved by the third step to heat-treat the molded product.

14. The method for preparing the negative-electrode material for the secondary battery of claim 8, wherein an average diameter (D₅₀) of the composite is in a range of 1 to 18 *µ*m.

15. The method for preparing the negative-electrode material for the secondary battery of claim 8, wherein the method further comprises: after the (d),
(e) further mixing the composite and a first carbon material with each other at a weight ratio of 1: 1 to 1:7 to prepare the active material; and
(f) mixing the active material, the conductive material, and the binder with each other at a weight ratio of 100: 0.1 to 5: 1 to 20 to prepare a slurry.
